# EUROPEAN PATENT SPECIFICATION

(11) **EP 1 161 701 B1**
(45) Date of publication and mention of the grant of the patent: **09.11.2005**
(21) Application number: 00910251.8
(22) Date of filing: 18.02.2000
(51) Int. Cl.: G02B 17/00, G02B 3/02, G02B 3/00, G02B 1/04, G02B 7/02

(54) **OBJECTIVE LENS**
OBJEKTIVLINSE
LENTILLE D'OBJECTIF

(30) Priority: 19.02.1999 JP 4240899
(43) Date of publication of application: 12.12.2001
(73) Proprietor: Sony Computer Entertainment Inc., Tokyo 107-0052 (JP)
(72) Inventor: MIURA, Kazuo, Yokohama-shi, Kanagawa (JP)
(74) Representative: Turner, James Arthur
(86) International application number: PCT/US2000/004327
(87) International publication number: WO 2000/049445

(56) References cited:
- US-A- 5 257 145
- US-A- 5 995 304
- PATENT ABSTRACTS OF JAPAN vol. 1999, no. 04, 30 April 1999 (1999-04-30) -& JP 11 023808 A (FUJI PHOTO OPTICAL CO LTD), 29 January 1999 (1999-01-29)
- PATENT ABSTRACTS OF JAPAN vol. 1998, no. 13, 30 November 1998 (1998-11-30) -& JP 10 221583 A (MATSUSHITA ELECTRIC IND CO LTD), 21 August 1998 (1998-08-21)
- PATENT ABSTRACTS OF JAPAN vol. 010, no. 030 (P-426), 5 February 1986 (1986-02-05) -& JP 60 179948 A (MATSUSHITA DENKI SANGYO KK), 13 September 1985 (1985-09-13)
- PATENT ABSTRACTS OF JAPAN vol. 1997, no. 07, 31 July 1997 (1997-07-31) -& JP 09 063095 A (SONY CORP), 7 March 1997 (1997-03-07)
- PATENT ABSTRACTS OF JAPAN vol. 2000, no. 18, 5 June 2001 (2001-06-05) -& JP 01 116196 A (MITSUI CONSTR CO LTD), 9 May 1989 (1989-05-09)

## Description

The present invention relates to an objective lens for focussing a plurality of laser beams having different wavelengths onto an optical disc.

Nowadays, there are many kinds of optical recording media, including CDs and DVDs. It is to be noted that there is a tendency to use a single objective lens for various kinds of discs, that is, to focus beams on, for example, a CD and a DVD using the same objective lens.

In the case of a CD, a beam having a wavelength of 780 nm is focussed, and in the case of a DVD, a beam having a wavelength of 650 nm is focussed, so that the so-called working distance between the disc and the objective lens differs according to the disc used. The working distance is 1.3 mm for the CD, and 1.7 mm for the DVD.

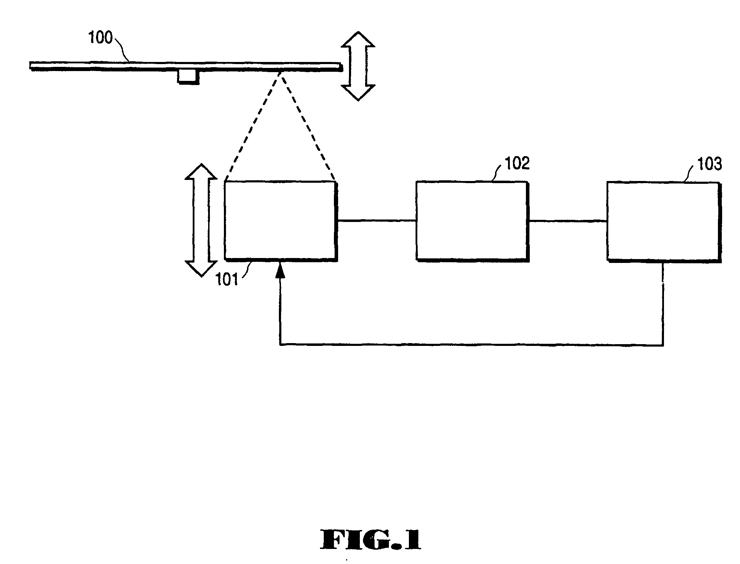

In the focus servo mechanism for the objective lens, a pick-up 101 moves vertically as the disc 100 moves vertically during rotation due to small warps in the disc 100, as shown in Fig. 1. Apart from the pick-up 101, the servo mechanism includes a feedback circuit comprising a focus error signal detection circuit 102 and a phase compensation drive amplifier 103. The servo mechanism maintains the proper working distance between the objective lens and the disc 100.

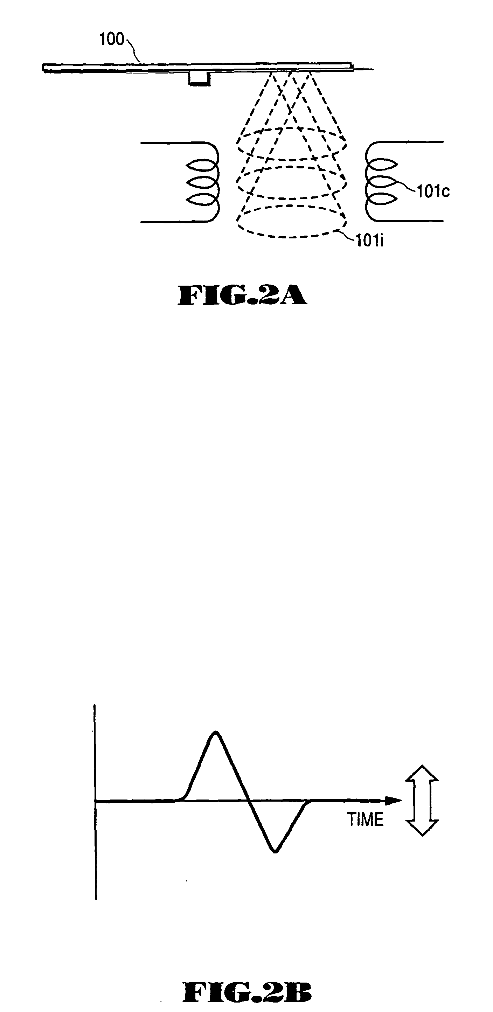

As shown in Fig. 2A, the objective lens 101L moves vertically by the excitation of coils 101C. As shown in Fig. 2B, during operation the focus servo maintains the proper working distance by moving the objective lens 101L towards the disc 100 and then moving the objective lens 101L away from the disc 100.

When focus servo moves the objective lens over wide ranges for different working distances, it frequently occurs that the objective lens collides with the back surface of the disc when operating at the smaller working distance. When the objective lens collides with the back surface of the disc, either the objective lens itself or the back surface of the disc is damaged.

Accordingly, it is an object of the present invention to provide an objective lens which prevents damage of the lens and the back surface of the disc as a result of collisions.

Japanese Patent Application Publication No. JP-A-11016196 (Fuji Photo Optical Co Ltd) discloses an objective lens for focussing light onto an optical disc, the lens comprising: a main body having a center section and a flanged peripheral section; a convex surface at the center section, the convex surface being spaced from the peripheral section; and a protective member fitted to the peripheral section and separate from the main body; wherein the protective member is formed as an apertured circular plate covering the lens main body and is tall enough so that the protective member protrudes beyond a plane that is tangent to the apex of the convex surface of the main body.

According to a first aspect of the present invention there is provided an objective lens as set forth in claim 1 hereof.

According to a second aspect of the invention, there is provided a method of protecting an objective lens from damage due to contact with an optical disc, the method being as set forth in claim 8 hereof.

The invention will now be further described, by way of illustrative and non-restrictive example, with reference to the accompanying drawings, in which:
Fig. 1 is a block diagram of a focus servomechanism;
Figs. 2A and 2B are schematic views illustrating the focus servomechanism;
Figs. 3A, 3B and 3C are sectional views of respective objective lenses, the lens shown in Fig. 3B being a lens embodying the present invention;
Fig. 4 is a schematic view of a disc playback apparatus; and
Fig. 5 is a schematic view of another disc playback apparatus.

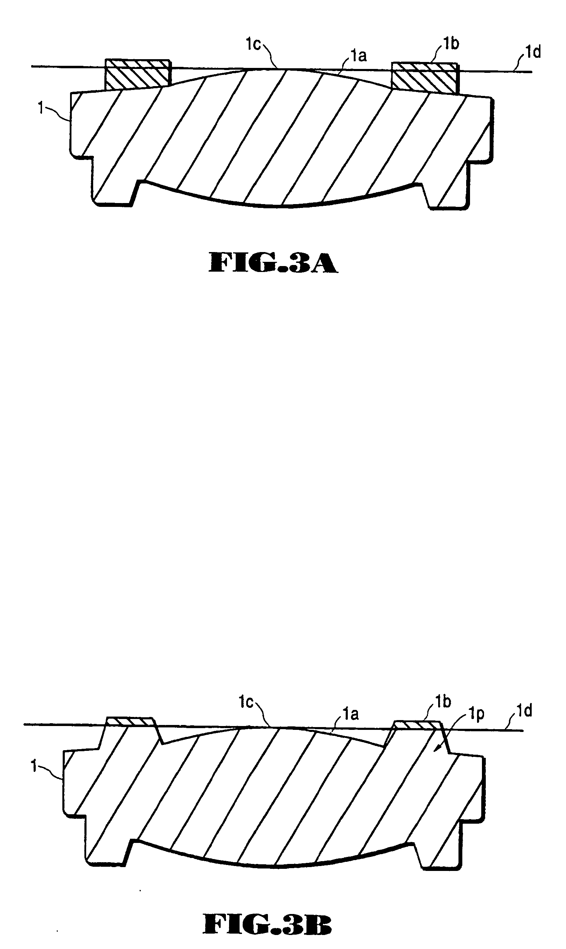

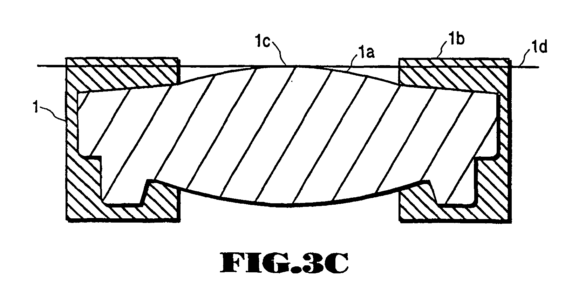

A description now be given with reference to Figs. 3A through 5. Figs. 3A, 3B and 3C show respective objective lenses, of which that shown in Fig 3B is an embodiment of the present invention. In Figs. 3A, 3B and 3C, the upper side of the lens is opposed to the back side of the disc. In Fig. 3A, a protective member 1b separate from a lens main body 1a is attached to a peripheral flat surface portion of the lens main body 1a of an objective lens 1 opposed to the back side of the disc.

This protective member 1b is formed as a ring surrounding the lens main body 1a and is high enough so as to protrude beyond a plane 1d which is tangent to the apex of the convex surface 1c of the lens main body 1a.

The protective member 1b is preferably formed of an elastic material having a fixed level of hardness, such as rubber, plastic or other suitable materials. Examples of suitable rubber materials include: natural rubber, butyl, polyurethane Viton™ and other synthetic rubbers. Examples of suitable plastics include: nylon, Teflon, Delrin, Torlon and polycarbonate. Examples of other suitable materials include: cotton, paper and other soft materials.

In Fig. 3B, the top portion of a protective protrusion 1p of the conventional objective lens 1 is cut away, and the protective member 1b is attached to the surface of the portion of the protective protrusion 1p. The protective member 1b protrudes beyond a plane 1d which is tangent to the apex of the convex surface 1c of the lens main body 1a, That is, the protective member 1b is only provided on the protective protrusion 1p surrounding the lens main body 1a. In one embodiment, the protective protrusion 1p is integrally formed with the objective lens 1. The protective member 1b is stacked on top of the protective protrusion 1p. Due to the small working distance between the objective lens 1 and the disk, it is important to minimize the height of the protective member 1b above the apex of the convex surface 1c of the lens main body 1a. If the protective member 1b protrudes to a larger degree than necessary it is liable to collide with the back surface of the disc, which is undesirable. That is, it is undesirable to simply stack the protective member 1b on the protective protrusion 1p well beyond the lens main body 1a since the protective member 1b would forcibly rub against the back surface of the disc. Further, the reproduction of signals would be hindered and the focus mechanism could be damaged since focus servo is constantly operating during the rotation of the disc.

Fig. 3C illustrates an objective lens 1 wherein the protective member 1b is formed around the perimeter of the objective lens 1. The protective member 1b may be molded or attached by other means including: bonding, adhesives and melting around the objective lens 1. Again the protective member 1b protrudes beyond a plane 1d which is tangent to the apex of the convex surface 1c of the lens main body 1a.

While in the examples shown in Figs. 3A 3B and 3C the protective member 1b is formed continuously around the lens main body 1a, it is possible in other embodiments to provide a plurality of protective members 1b at equal intervals or unequal intervals in the periphery of the lens main body 1a. In still other embodiments, the protective protrusion 1p is a plurality of equal intervals or unequal intervals in the periphery of the lens main body 1a. The height of the stacked protective member 1b and protective protrusion 1p is the same as the previously described embodiments. Furthermore, even if collision occurs, it is not the protective protrusion 1p but the protective member 1b that collides with the back surface of the disc. This protective member 1b may be formed by applying a protective material to the protective protrusion 1p. Because the protective member 1b is made of a soft material, damage to the lens 1 and disc are substantially reduced as compared with objective lenses not having a protective member 1b.

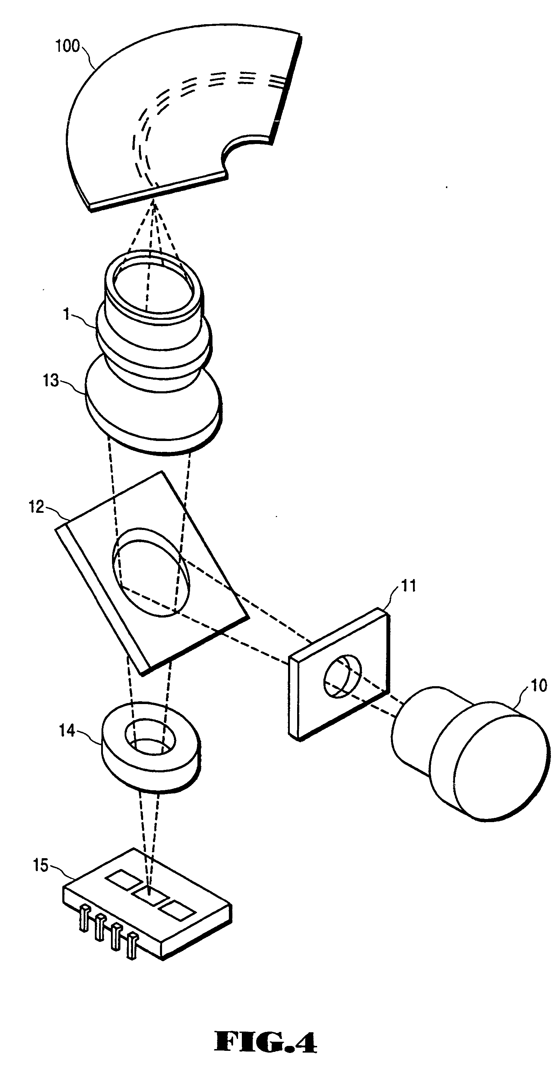

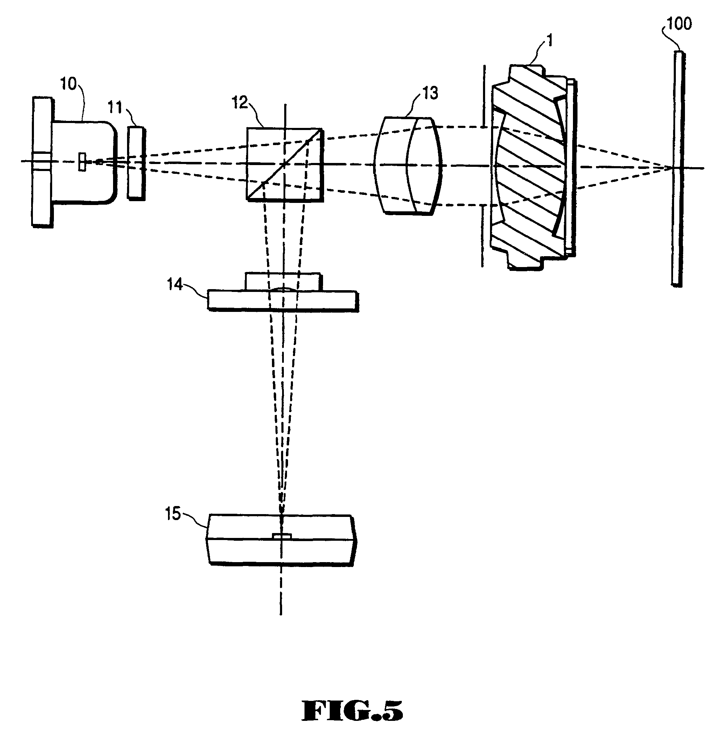

Figs. 4 and 5 show playback apparatuses for a disc 100 which includes: a laser beam source 10, an aperture, a beam splitter 12, a collimator lens 13, a focusing lens 14, a photodetector 15 and an objective lens 1. The laser beam source 10 can be: a laser diode, a semiconductor laser, or the any other suitable laser source. The beam splitter 12 separates incident light from the laser beam source 10 and reflected light from the disc 100. The collimator lens 13 produces a parallel beam for the objective lens 1. The focussing lens 14 focuses light onto the photodetector 15.

The apparatus shown in Fig. 5 is similar to that shown in Fig. 4 except that in Fig. 5, the incident beam from the laser beam source 10 is transmitted through the beam splitter 12 and the output beam from the disk 100 is reflected by the beam splitter 12. In the apparatus shown in Fig. 4 the incident beam from the laser beam source 10 is reflected by the beam splitter and the output beam from the disk 100 is transmitted through the beam splitter 12. Although not shown in Figs. 4 and 5, the objective lens 1 has a protective member around the periphery of the lens main body as illustrated in Figs. 3A, 3B and 3C.

While only three examples are shown in Figs. 3A, 3B and 3C, various modifications are possible as long as the protective member 1b protrudes beyond a plane 1d tangent to the apex of the convex surface 1c of the lens main body 1a. Further, the objective lens of this embodiment is applicable to any system in which a single objective lens is used to read from and/or write to a plurality of kinds of discs, requiring changes in the focal length and working distance.

As described above, in accordance with the present invention, an objective lens has a protective member on its surface which protects it from colliding with the associated disc, whereby damage to the lens and disc is avoided.

In the foregoing, an objective lens has been described. Although the present invention has been described with reference to specific exemplary embodiments, it will be evident that various modifications and changes may be made to these embodiments without departing from the scope of the invention as set forth in the claims. Accordingly, the specification and drawings are to be regarded in an illustrative rather than a restrictive sense.

## Claims

1. An objective lens (1) for focussing a plurality of laser beams having different wavelengths onto an optical disc, the lens comprising:
a main body (1a) having a center section and a peripheral section;
a convex surface (1c) at the center section, the convex surface being next to the peripheral section;
a protective protrusion (1p) projecting outwardly in the direction of the optical axis from the peripheral section and having a surface that is outermost in the direction of the optical axis; and
a protective member (1b) of a different material attached substantially only to said outermost surface of the protective protrusion (1p) without substantially contacting the peripheral section or the center section;
wherein the protective member (1b) is formed as a ring surrounding said center section of the main body and is thick enough so that at least a portion of the protective member protrudes upwardly beyond a plane (1d) that is tangent to the apex of the convex surface (1c) of the main body.

2. An objective lens according to claim 1, wherein said ring is formed continuously around said section of the main body.

3. An objective lens according to claim 1, wherein the protective member is substantially circular in shape.

4. An objective lens according to claim 1, wherein said ring comprises a multiplicity of segments that are isolated from one another.

5. An objective lens according to claim 1 or claim 4, wherein the protective member is made at least partially of rubber.

6. An objective lens according to claim 1 or claim 4, wherein the protective member is made at least partially of plastic.

7. An objective lens according to claim 1, where the contact surface between the protective protrusion (1p) and the protective member (1b) defines a contact plane that is substantially parallel to the lateral axis of the main body (1a).

8. A method of protecting an objective lens (1) from damage due to contact with an optical disc (100), the method comprising the steps of:
providing the objective lens as defined in claim 1;
providing the optical disc (100) which is capable of rotational movement in close proximity to the objective lens (1);
contacting the optical disc (100) with the protective member;
protecting the optical disc from damage; and
preventing contact between the optical disc and the lens convex surface (1c).

9. A method according to claim 8, wherein the protective member is made at least partially of rubber or plastic.

10. A method according to claim 8, where the contact surface between the protective protrusion (1p) and the protective member (1b) defines a contact plane that is substantially parallel to the lateral axis of the main body, (1a).

## Patentansprüche

1. Objektivlinse (1) zum Fokussieren mehrerer Laserstrahlen mit unterschiedlichen Wellenlängen auf einer optische Platte, wobei die Linse aufweist:
einen Hauptkörper (1a) mit einem zentralen Teil und einem Randteil,
eine konvexe Fläche (1c) in dem zentralen Teil, wobei diese konvexe Fläche an den Randteil angrenzt,
einen schützenden Vorsprung (1p), der von dem Randteil nach oben ragt und eine oberste Fläche besitzt, und
ein Schutzglied (1b) aus einem anderen Material, das im wesentlichen nur auf der obersten Fläche des schützenden Vorsprungs (1p) befestigt ist, im wesentlichen ohne den Randteil oder den zentralen Teil zu kontaktieren,
wobei das Schutzglied (1b) als Ring ausgebildet ist, der den zentralen Teil des Hauptkörpers umrandet und dick genug ist, so daß wenigstens ein Teil des Schutzglieds nach oben über eine Ebene (1d) hinausragt, die den Scheitel der konvexen Fläche (1c) des Hauptkörpers tangiert.

2. Objektivlinse nach Anspruch 1, bei der der Ring kontinuierlich um den zentralen Teil des Hauptkörpers ausgebildet ist.

3. Objektivlinse nach Anspruch 1, bei der das Schutzglied im wesentlichen kreisförmig ist.

4. Objektivlinse nach Anspruch 1, bei der der Ring eine Vielzahl von Segmenten umfaßt.

5. Objektivlinse nach Anspruch 1 oder 4, bei der das Schutzglied zumindest teilweise aus Gummi hergestellt ist.

6. Objektivlinse nach Anspruch 1 oder 4, bei der das Schutzglied zumindest teilweise aus Plastik hergestellt ist.

7. Objektivlinse nach Anspruch 1, bei der die Kontaktfläche zwischen dem schützenden Vorsprung (1p) und dem Schutzglied (1b) eine Kontaktebene bestimmt, die im wesentlichen parallel zur lateralen Achse des Hauptkörpers (1a) verläuft.

8. Verfahren zum Schützen einer Objektivlinse (1) gegen Beschädigung durch Kontakt mit einer optischen Platte (100), wobei das Verfahren die Verfahrensschritte umfaßt:
Bereitstellen der Objektivlinse, wie sie in Anspruch 1 definiert ist,
Bereitstellen der optischen Platte (100), die eine Drehbewegung in enger Nachbarschaft der Objektivlinse (1) ausführen kann,
Kontaktieren der optischen Platte (100) mit dem Schutzglied,
Schützen der optischen Platte gegen Beschädigung und
Verhindern eines Kontakts zwischen der optischen Platte und der konvexen Fläche (1c) der Linse.

9. Verfahren nach Anspruch 8, bei dem das Schutzglied zumindest teilweise aus Gummi hergestellt ist.

10. Verfahren nach Anspruch 8, bei dem die Kontaktfläche zwischen dem schützenden Vorsprung (1p) und dem Schutzglied (1b) eine Kontaktebene bestimmt, die im wesentlichen parallel zur lateralen Achse des Hauptkörpers (1a) verläuft.

## Revendications

1. Lentille d'objectif (1) destinée à focaliser une pluralité de faisceaux laser présentant différentes longueurs d'onde sur un disque optique, la lentille comprenant :
un corps principal (1a) comprenant une section centrale et une section périphérique ;
une surface convexe (1c) au niveau de la section centrale, la surface convexe étant à côté de la section périphérique ;
une saillie de protection (1p) faisant saillie vers le haut depuis la section périphérique et comprenant une surface la plus supérieure ; et
un élément de protection (1b) d'un matériau différent fixé sensiblement uniquement à ladite surface la plus supérieure de la saillie de protection (1p) sans entrer sensiblement en contact avec la section périphérique ou la section centrale ;
dans laquelle l'élément de protection (1b) est formé comme une bague entourant ladite section centrale du corps principal et est assez épaisse de sorte qu'au moins une partie de l'élément de protection fait saillie vers le haut au-delà d'un plan (1d) qui est tangent au sommet de la surface convexe (1c) du corps principal.

2. Lentille d'objectif selon la revendication 1, dans laquelle ladite bague est formée de manière continue autour de ladite section centrale du corps principal.

3. Lentille d'objectif selon la revendication 1, dans laquelle l'élément de protection est de forme sensiblement circulaire.

4. Lentille d'objectif selon la revendication 1, dans laquelle ladite bague comprend une multiplicité de segments.

5. Lentille d'objectif selon la revendication 1 ou la revendication 4, dans laquelle l'élément de protection est composé au moins partiellement de caoutchouc.

6. Lentille d'objectif selon la revendication 1 ou la revendication 4, dans laquelle l'élément de protection est composé au moins partiellement de plastique.

7. Lentille d'objectif selon la revendication 1, où la surface de contact entre la saillie de protection (1p) et l'élément de protection (1b) définit un plan de contact qui est sensiblement parallèle à l'axe latéral du corps principal (1a).

8. Procédé de protection d'une lentille d'objectif (1) des dommages dus au contact avec un disque optique (100), le procédé comprenant les étapes consistant à :
fournir la lentille d'objectif selon la revendication 1 ;
fournir le disque optique (100) qui est capable de mouvement rotatif en proximité proche de la lentille d'objectif (1) ;
mettre en contact le disque optique (100) avec l'élément de protection ;
protéger le disque optique des dommages ; et
empêcher le contact entre le disque optique et la surface convexe de lentille (1c).

9. Procédé selon la revendication 8, dans lequel l'élément de protection est composé au moins partiellement de caoutchouc ou de plastique.

10. Procédé selon la revendication 8, où la surface de contact entre la saillie de protection (1p) et l'élément de protection (1b) définit un plan de contact qui est sensiblement parallèle à l'axe latéral du corps principal (1a).
